# EUROPEAN PATENT SPECIFICATION

(11) **EP 3 470 657 B1**
(45) Date of publication and mention of the grant of the patent: **09.12.2020**
(21) Application number: 17195638.6
(22) Date of filing: 10.10.2017
(51) Int. Cl.: F02M 61/08, F02M 21/02, F02M 61/20

(54) **VALVE ASSEMBLY, VALVE ASSEMBLY ARRANGEMENT AND INJECTION VALVE**
VENTILBAUGRUPPE, VENTILBAUGRUPPENANORDNUNG UND EINSPRITZVENTIL
ENSEMBLE DE SOUPAPE, AGENCEMENT D'ENSEMBLE DE SOUPAPE ET SOUPAPE D'INJECTION

(43) Date of publication of application: 17.04.2019
(73) Proprietor: Vitesco Technologies GmbH, 30165 Hannover (DE)
(72) Inventor: Lyubar, Anatoliy, 93195 Wolfsegg (DE); Gebhardt, Xaver, 93309 Kelheim (DE); Kerekgyarto, Janos, 93057 Regensburg (DE)
(74) Representative: Waldmann, Georg Alexander

(56) References cited:
- EP-A1- 0 084 662
- EP-A2- 0 343 147
- DE-A1-102007 002 402

## Description

### Technical Field

In a first aspect this invention relates to a valve assembly for an injection valve, in particular for direct injection of compressed natural gas (CNG) into a combustion chamber of a cylinder of an internal combustion engine, wherein the valve assembly comprises a valve housing section having a fluid inlet portion and a fluid outlet portion, wherein the valve assembly comprises a cavity within the valve housing section which is in fluid communication with the fluid inlet portion and the fluid outlet portion, wherein the valve assembly comprises a valve needle which is axially movable along or parallel to a central longitudinal axis of the valve assembly between a closing position and other positions and wherein at least a section of the valve needle extends along the cavity.

In a second aspect the present invention relates to a valve assembly arrangement for an injection valve, the valve assembly arrangement extending along a central longitudinal axis and comprising a first valve assembly and a second valve assembly, wherein the second valve assembly is coupled to the first valve assembly in such a fashion that the first valve assembly is operable to inject fluid, in particular compressed natural gas, into a fluid inlet portion of the second valve assembly for increasing a fluid pressure at the fluid inlet portion of the second valve assembly in order to open the second valve assembly for dispensing a fluid from the valve assembly arrangement.

In a third aspect the invention relates to an injection valve comprising a valve assembly arrangement according to the second aspect of the invention. An injection valve can also be denoted as an injector.

A fourth aspect relates to a method of injecting a fluid, in particular of injecting compressed natural gas (CNG), directly to a combustion chamber of a cylinder of an internal combustion engine, comprising the steps:
providing an internal combustion engine which comprises an injection valve and a cylinder having a combustion chamber, injecting a fluid, in particular compressed natural gas (CNG), by the injection valve directly to the combustion chamber.

### Background Art

Injection valves are in wide spread use, in particular for internal combustion engines where they may be arranged in order to dose a fluid into an intake manyfold of the internal combustion engine or directly into a combustion chamber of a cylinder of an internal combustion engine. Injection valves are manufactured in various forms in order to satisfy the various needs for the various combustion engines. Injection valves may comprise a valve assembly which accommodates an actuator for actuating a valve needle. The actuator, for example, may be an electromagnetic actuator or a piezo-electric actuator. Such valve assemblies are considered to be of the so called active type, because they enable an active control of its operation, including opening the active valve assembly by means of the actuator and closing the active valve assembly by means of a compressed spring (or the other way around). Other valve assemblies, which are considered to be of the passive type, may comprise a valve needle and a pre-stressed spring in order to apply a spring force to the valve needle towards its closing position and may be opened contrary to the spring force, when a pressure is increased at a fluid inlet portion of the passive valve assembly.

In the prior art there are known valve assembly arrangements comprising a passive valve and an active valve which is upstream to the passive one. In such combinations the passive valve is used to release fuel or gas (i.e. fluid) without being directly controlled, but following to the actuation of the upstream valve. Usually the upstream valve is an active valve, i.e. for example a valve enabling active control by a solenoid or the like. Often the passive valve is placed to protect an upstream valve to be exposed to difficult environmental conditions, like for example high temperatures near to a combustion chamber. Regarding this, in practice the passive valve assembly is often denoted by the term "hot valve" and the active valve by the term "cold valve". The opening of the passive valve occurs, when the upstream valve releases pressurized fuel or gas which by means of the pressure energy opens the passive valve assembly. Such valve assembly arrangement is known for example from WO 2013/083626 A1. It comprises a first active valve assembly including an actuator and a second passive valve assembly. The closing function of the passive valve assembly is performed by a pre-compressed spring, which keeps the passive valve normally closed. The spring load defines under which pressure conditions the passive valve assembly begins to open and also when the passive valve assembly begins to close.

Attempts have been taken to use such a valve assembly arrangement including an active valve assembly and a passive valve assembly for direct injection of compressive natural gas (CNG) into the combustion chamber of a cylinder of an internal combustion engine. Often the passive valve assembly is of the so called outward opening type which means that the valve assembly is opened, when at an axial end area the tip of its valve needle moves in an outward direction, i.e. away from valve housing section (on the other hand an inward opening type means that a valve is opened by a movement of its valve needle directed inwardly to its valve housing section). The passive valve assembly of the outward opening type is opened to the combustion chamber by compressive forces provided at a fluid outlet portion of the active valve assembly, which is in fluid communication to a fluid inlet portion of the passive valve assembly. In such systems the pneumatic damping is very poor because of the low density and viscosity of the compressed natural gas. Accordingly, high velocities of the valve needles result. In practice it has been observed that the valve needle of the passive valve assembly (i.e. of the so called "hot valve") is accelerated up to a velocity of 3 meters per second. Without damping these velocities cause a strong impulse when the valve needle strikes to the valve seat or to an end stop (i.e. stroke limiter). This in turn results in an inacceptable wear and a shortened life span of the respective injection valve.

Valve systems for direct injection of CNG are under development. In recent concepts of such systems components have been broken or damaged due to the occurring high velocities.

DE 10 2007 002402 A1 discloses a gas inlet for an internal combustion motor, using a gas fuel, has an actuator to move a needle to open and close the opening for gas to blow through. A hydraulic stroke transformer converts a short actuator stroke into a long needle stroke movement. The transformer, filled with a fluid, has an actuator piston through a rear opening to act on the fluid to move the needle piston through a front opening. A seal is between the rear opening and the housing forming a sealing chamber and a similar seal at the front opening forms a sealing chamber. A channel connects the two chambers.

EP 0 343 147 A2 discloses a valve having a nozzle holder, a nozzle body and a nozzle needle, the nozzle needle being capable of actuation by fuel pressure admission against the force of a closing spring accommodated in a spring chamber of the nozzle holder and operating in conjunction with a damping device which comprises a fuel-filled damping chamber opening out into a restriction. Interposed between the nozzle needle and the damping chamber is an independent damping piston, which damping piston, entering into the damping chamber, is positively connected to the nozzle needle. In order to achieve a low-cost and particularly effective damping device, an intermediate piece closing the spring chamber of the nozzle holder on the nozzle needle side forms the damping chamber and accommodates the damping piston lying in the line of forces between the closing spring and nozzle needle.

### Summary of Invention

According to the first aspect it is an object of the invention to provide an improved valve assembly, in particular in order to overcome the described disadvantages. As to the second aspect it is an object of the invention to provide an improved valve assembly arrangement, in particular in order to overcome the described disadvantages. Regarding the third aspect it is an object of the invention to provide an improved injection valve, in particular in order to overcome the described disadvantages. As to the fourth aspect it is an object of the present invention to provide an improved method of injecting a fluid, in particular of injecting compressed natural gas, in particular directly to a combustion chamber of a cylinder of an internal combustion engine.

In the first aspect in order to achieve the object the present invention provides a generic valve assembly wherein the valve housing section comprises a cross wall being situated axially between the fluid inlet portion and the cavity, wherein the cross wall includes a hollow bore extending along or parallel to the central longitudinal axis from a front wall facing the fluid inlet portion to a mouth facing the cavity, wherein the valve needle comprises a first axial end section being inserted in the hollow bore and being movable therein axially relative to the cross wall, wherein the front wall includes a throttling via hole, wherein a hollow cross section of the throttling via hole is smaller compared to a cross section of the first axial end section and wherein the valve housing section comprises one or more fluid passages extending between the fluid inlet portion and the cavity.

Expediently, the cross wall is positionally fix inside the fluid inlet portion. For example, it is press-fitted and/or brazed and/or welded into a sleeve element of the valve housing section which defines the fluid inlet portion. Preferably, the front wall is positioned at an end of the cross wall facing away from the mouth. The front wall may expediently be arranged in the hollow bore so as to close the hollow bore at its axial end remote from the mouth. In particular, the front wall is fixed to or in one piece with the cross wall.

Because of its small hollow cross section the throttling via hole acts as a throttle. Further, because of the small hollow cross section of the throttling via hole the hollow bore in the cross wall and the first axial end section of the valve needle act together as a damper in order to dampen the movement of the valve needle in its both moving directions. Regarding this function, the throttling opening can also be denoted as being a damping orifice. This can be achieved by inserting the first axial end section of the valve needle (i.e. the one of the both axial end sections which is comparatively closer to the fluid inlet portion - in other words the axial end section of the valve needle remote from the fluid outlet portion) into a small cylinder by connecting the volume of the small cylinder with a throttle for pressure supply. The throttle or throttling via hole shall be configured so small that the velocities of the valve needle remain at an intended low level. The gap between the wall of the cylinder and the valve needle shall be sealed at the insertion of the valve needle in the cylinder. For dimensioning the size of the throttle and/or of the volume of the cylinder and/or the diameter of the inserted section of the valve needle may be varied. Regarding such arrangement, if the fluid pressure at the fluid inlet portion of the present valve assembly is increased quickly, the throttle effects that the fluid pressure within a fluid chamber provided by the cylinder increases comparatively slower; furthermore, the fluid pressure within the cylinder only reacts on a surface of the valve needle, which is smaller compared to the pressure-active surface of the valve needle at its opposite end or as the pressure-active surface of a closing element mounted to the valve needle. Accordingly, the accelerating force and hence also the velocity of the valve needle during opening of the valve assembly remains lower compared to a conventional valve assembly. On closing the valve assembly the effect is reversed. If the fluid pressure within the fluid inlet portion is suddenly decreased, the throttle effects that the pressure within the cylinder decreases comparatively slower and hence the closing velocity is also decreased compared to a conventional valve assembly. The invention enables to reduce the velocities to an intended level so that the velocity cannot cause significant wear. Preferably, the velocity can be reduced below 1 m per second. In such a range, the velocities have no influence to the life time of an injection valve / injector.

There are many possibilities for performing preferred modifications:
It is preferred that the first axial end section comprises a front surface facing the front wall, wherein the hollow cross section of the throttling via hole is smaller compared to the cross section of the front surface. In a preferred embodiment it is provided that the hollow cross section of the hollow bore and the cross section of the first axial end section are adapted to each other so that the hollow bore provides a longitudinal guidance for the first axial end section. Preferably, the hollow cross section of the hollow bore and the cross section of the first axial end section are adapted to each other for providing a loose fit or a transition fit. The mentioned cross sections of the first axial end section, of its front surface, of the hollow bore and of the throttling via hole are taken in geometrical planes which preferably extend orthogonally to the central longitudinal axis.

According to the present invention, the mouth of the hollow bore or a surface which surrounds said mouth is sealingly connected to the valve needle by an elastomer coupling or a bellow or the like. Thereby it is possible to avoid that fluid which passes through a gap between the axial end section of the valve needle and the surrounding surface of the cross wall at the hollow bore reaches the mentioned cavity. Hence, if there is a first fluid pressure in an interspace between the front wall and the front surface of the first axial end section of the valve needle and a second fluid pressure, differing from the first fluid pressure, in the cavity, by means of said seal it is possible to avoid a direct pressure compensation between the first and the second pressure. Preferably, a cross-sectional area of the cross section of the first axial end section of the valve needle which in particular has a dimension of some square millimeters is smaller compared to a cross-sectional area of a cross section of a second axial end section of the valve needle or smaller compared to a cross-sectional area of a cross section of a closing element fixed to a second axial end section of the valve needle. Compared to the first axial end section of the valve needle its second axial end section is situated closer to the outlet of the valve assembly. It is preferred that the hollow cross section of the throttling via hole has a diameter less than 1 millimeter, in particular in a dimension of 100 - 300 micrometers.

In a preferred embodiment the fluid passage or at least one of the fluid passages comprises a drill hole or a notch and in particular is formed in the cross wall and/or in a part of the valve housing section surrounding the cross wall, wherein in particular the total cross-sectional area of the hollow cross section of the fluid passage or of the hollow cross sections of the fluid passages is greater than the cross-sectional area of the hollow cross section of the throttling via hole.

Preferably, the valve assembly is of the outward opening type.

In a preferred embodiment the valve assembly comprises a spring being compressed between an inner supporting surface of the valve housing section and an outer supporting surface of the valve needle or of a member fixed to the valve needle for applying an axially force to the valve needle towards its closing position. The valve assembly may comprise a stop which is provided to limit a movement of the valve needle away from its closing position.

It is preferred that in an operating state of the valve assembly where the valve needle is in its closing position there is an axial distance between the front face and the front wall. Furthermore, it is preferred that in any operating state of the valve assembly the front surface of the valve needle and the front wall are axially spaced.

Regarding the second aspect in order to solve the above mentioned object the present invention provides a generic valve assembly arrangement, wherein the second valve assembly is a valve assembly according to the present invention. The first valve assembly may be situated upstream to the second valve assembly with regard to the flow direction of a dispensed fluid. Compared to the first (upstream) valve assembly the second (downstream) valve assembly is closer to a combustion chamber. Hence, the first valve assembly is also denoted by the term "cold valve" (which means cold valve assembly) and the second valve assembly is also denoted by the term "hot valve" (which means hot valve assembly) .

There are many possibilities for performing preferred modifications:
It is preferred that the first valve assembly comprises a valve needle and an electromagnet for enabling an active movement of its valve needle in a first direction towards an opening position of the first valve assembly or towards a closing position of the first valve assembly and that the first valve assembly comprises a spring for supporting an active movement of its valve needle in a second direction which is opposite to the first direction. Hence, the first valve assembly is considered to be an active valve assembly and the second valve assembly is considered to be a passive valve assembly.

Regarding the third aspect in order to solve the above mentioned object the invention provides an injection valve comprising a valve assembly arrangement according to the invention.

The fourth aspect is a generic method of injecting a fluid, wherein the injection valve is an injection valve according to the present invention and wherein a maximum speed of the valve needle of the second valve assembly along the central longitudinal axis is 1 m per second or less.

### Brief Description of Drawings

The invention will now be described by way of example with reference to the accompanying drawings. These are as follows:
Fig. 1 is a schematic longitudinal sectional view of an inventive valve assembly arrangement according to a first preferred embodiment, including an inventive valve assembly according to a first preferred embodiment, and
Fig. 2 is a representation of time dependent graphs of the velocity of a valve needle, a damper pressure applied to the valve needle and a valve needle lift of an inventive valve assembly according to a preferred embodiment.

### Description of Embodiments

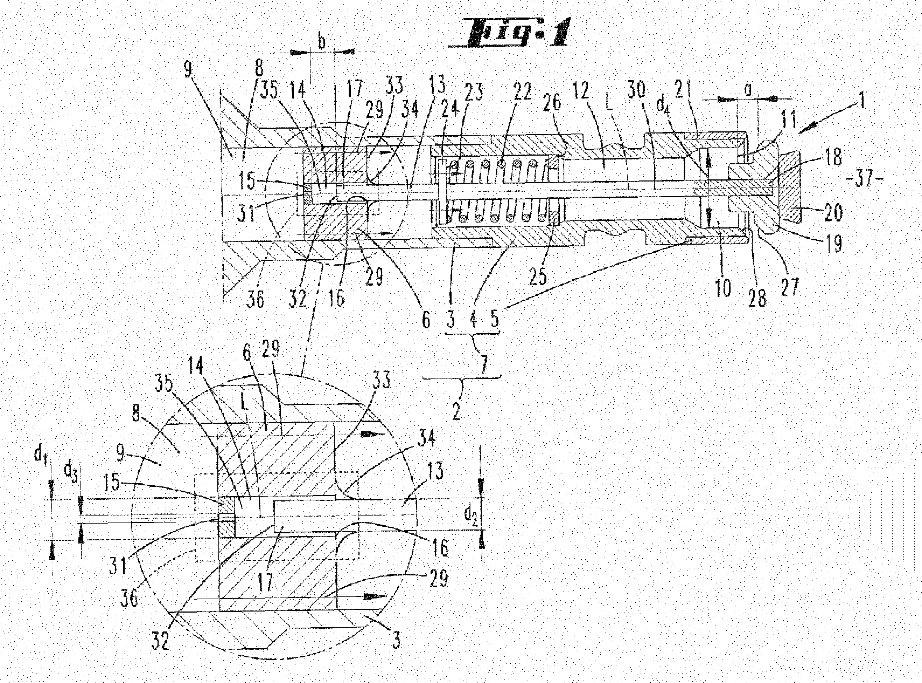

With reference to figure 1 it is described by way of example an embodiment of a valve assembly 1 according to the invention. As described below, the valve assembly 1 is of the outward opening type and is a passive valve assembly. It is suitable to be a part of an inventive valve assembly arrangement for an inventive injection valve. For this purpose the valve assembly 1 may be coupled downstream to an active valve assembly (not shown in figure 1). For example, i.e. not limiting, such an active valve assembly may be of the type disclosed by WO 2013/083626 A1 or EP 3 153 697 A1 of the applicant. The valve assembly 1 preferably can be used for direct injection of a compressed natural gas (CNG) into a combustion chamber of a cylinder of an internal combustion engine (not shown in figure 1).

The valve assembly 1 comprises a valve housing section 2, which is composed of some housing components and which might be a sectional part of a housing of an inventive valve assembly arrangement or a part of a housing of an inventive injection valve. In the exemplary embodiment the valve housing section 2 includes a sleeve-like portion of a first housing part 3, a sleeve-like second housing part 4 and a third housing part 5. The first and third housing parts 3, 5 are mounted to opposite ends of the second housing part 4 for providing an outer housing section which extends along a central longitudinal axis L of the valve assembly 1, i.e. of the respective valve assembly arrangement or injection valve. Furthermore, the valve housing section 2 comprises a cross wall 6 which is inserted into the central hollow space 8 of the first housing part 3 and fixed to the first housing part 3 so that no axial relative movement is possible. The valve assembly 1 comprises a fluid inlet portion 9 and a fluid outlet portion 10 at opposite longitudinal ends. The fluid inlet portion 9 is in fluid communication with a fluid outlet portion of an active valve assembly which is not shown by figure 1. At the opposite longitudinal end of the valve assembly 1 the outer housing section 7 includes an orifice 11. The valve assembly 1 includes a cavity 12 which extends from a facing surface 33 of the cross wall 6 and is in fluid communication with the fluid inlet portion 9 and the fluid outlet portion 10. The valve assembly 1 comprises a valve needle 13 which extends along the central longitudinal axis L. As described in the following, the valve needle 13 is inserted in the valve assembly 1 so that it is axially moveable (i.e. moveable along the longitudinal axis L) between a closing position and other positions. The cross wall 6 includes a hollow bore 14 which extends along the longitudinal axis L from a front wall 15 to a mouth 16. In the exemplary embodiment the front wall 15 is a disc which is fixed at the cross wall 6, however, it is evident that as an alternative the front wall 15 may be formed integrally at the cross wall 6. The front wall 15 faces the fluid inlet portion 9 and the mouth 16 faces the cavity 12. The valve needle 13 comprises a first axial end section 17 and at its opposite longitudinal end a second axial end section 18. The first axial end section 17 is inserted in the hollow bore 14 in such a manner that it is moveable therein axially relative to the cross wall 6. At the opposite second axial end section 18 it is fixed a closing element 19 in the form of a plug whose outer maximum diameter exceeds the outer diameter of the valve needle 13. The valve assembly 1 comprises a stop 20 which is provided to limit a movement of the valve needle 13 away from its closing position. In the exemplary embodiment the stop 20 and the cylindrical section 21 are both parts of the third housing part 5 wherein the stop 20 is fixed to the cylindrical section 21 by means of a fixture which is not shown by figure 1 in such manner that the stop 20 cannot move axially relative to the cylindrical section 21. In figure 1 it is shown an operating state of the valve assembly 1, when the closing element 19 lies against the stop 20, so that the valve assembly 1 is opened to a maximum for dispensing a fluid, preferably compressed natural gas (CNG) into the combustion chamber 37 of a cylinder of an internal combustion engine.

In the exemplary embodiment the valve assembly 1 comprises a spring 22 which is a cylindrical compression spring. The spring 22 is mounted in a pre-stressed condition in order to apply to the valve needle 13 an axially directed force towards the cross wall 6. For this purpose a disc-like member 24 is axially fixed on the valve needle 13. A first axial end of the spring 22 is axially supported at a member 24 by a supporting surface 23 facing the fluid outlet portion 10. Further, an inner surface of the second housing part 4 provides a ring shoulder 26 facing the fluid inlet portion 9. A washer 25 is axially supported by the ring shoulder 26 and a second axial end of the spring 22 is axially supported by the washer 25. As will be understood by a skilled person the disc-like member 24 may include a number of via holes or the like in order to enhance the flow of a fluid to be dispensed.

In figure 1 this is symbolically shown by respective arrows. From the above description it is clear, that the pre-stressed spring 22 applies an axially directed force to the valve needle 13 towards its closing position, at which a first sealing surface of the closing element 19 is axially pressed against a second sealing surface 28 of the valve housing section 2.

The valve housing section 2 comprises one or more fluid passages 29 for providing a fluid connection between the fluid inlet portion 9 and the cavity 12. A respective fluid passage 29 may be formed for example by a drill hole or a notch or in another manner. For example a number of fluid passages 29 may be distributed along a circumference of the cross wall 6. Respective fluid passages may be formed within the cross wall 6 and/or in a sleeve-like part of the valve housing section 2 surrounding the cross wall 6 (i.e. in the example of figure 1 in the first housing part 3). In figure 1 a number of fluid passages 29 is symbolically indicated by respective arrows, wherein the direction of the arrows also indicates the flow direction of a fluid to be dispensed.

The first axial end section 17 of the valve needle 13 is inserted into a hollow bore 14 of the cross wall 6 and is moveable therein axially relative to the cross wall 6. A medium section 30 of the valve needle 13 between the first and second axial end sections 17, 18 extends along the cavity 12 from the cross wall 6 towards the fluid outlet portion 10. The front wall 15 includes a throttling via hole 31 whose hollow cross section is considerably smaller compared to the cross section of the first axial end section 17 of the valve needle 13 (considered are cross sections in respective geometrical planes which extend orthogonally to the central longitudinal axis L). The first axial end section 17 comprises a front surface 32 facing the front wall 15. The hollow cross section of the throttling via hole 31 is considerably smaller compared to the cross section of the mentioned front surface 32. In the exemplary embodiment the cross section of the hollow bore 14 is circular and has an outer diameter d₁, the cross section of the first axial end section 17 is circular and has an outer diameter d₂ and the hollow cross section of the throttling via hole 31 is circular and has an outer diameter d₃. In the example the diameter d₁ is slightly greater compared to d₂ such, so that a loose fit results and so that the hollow bore 14 provides a longitudinal guidance for the first axial end section 17.

As also shown by figure 1 the valve assembly 1 comprises an elastic bellow 34, which is fixed in respective fluid-tight manner to the cross wall 6 at a surface 33 surrounding the mouth 16 and at the valve needle 13 in order to provide a fluid-tight connection. The elastic connection enables the valve needle 13 to move axially relative to the cross wall 6 to a certain extent. As mentioned above, in the example the hollow cross section of the throttling via hole 31 has a circular shape, which is indicated by the diameter d₃ in figure 1. The magnitude of d₃ is less than the magnitude of d₁ and d₂. Whereas d₂ and d₃ may for example be in a magnitude of a few millimeters, d₁ preferably is less than 1 mm and preferably (i.e. not binding) may preferably be in a dimension of 100-300 pm. On the other hand, the cross sectional area of the cross section of the first axial end section 17 is smaller compared to the cross-sectional area of a cross-section of the closing element 19. Especially a front surface which is surrounded by the diameter d₂ is much smaller compared to a front surface of the closing element 19 if seen from the cavity 12 in an axial projection, i.e. a front surface of the closing element 19 which has an outer diameter d₄ (which is provided by the internal surface of the fluid outlet portion 10) and an inner diameter d₂.

From the above description it appears that a fluid chamber 35 which is defined by the hollow bore 14, the first axial end section 17 of the valve needle 13, the bellow 34 and the front wall 15 is separated from the fluid inlet portion 9 with the exception of the throttling via hole 31 and is tightened from the cavity 12. Because of the described geometrical dimensions the arrangement of these components constitute a damper 36 which enables a dampening of the movement of the valve needle 13 in its both axial moving directions. The arrangement is like a piston which is sealingly guided by a cylinder having a small opening. In the exemplary embodiment, i.e. not binding, the amount of the maximal axial displacement a of the valve needle 13 between the opening position and the closing position is slightly less compared to an axial distance b between the front wall 15 and the front surface 32 of the valve needle 13 when the valve assembly 1 is opened to the maximum. This in other words means that in the closing position of the valve needle 13 there still remains an at least small axial distance between the front wall 15 and the front surface 32. However, as an alternative, it would be possible that the maximum axial displacement a corresponds to the axial distance b.

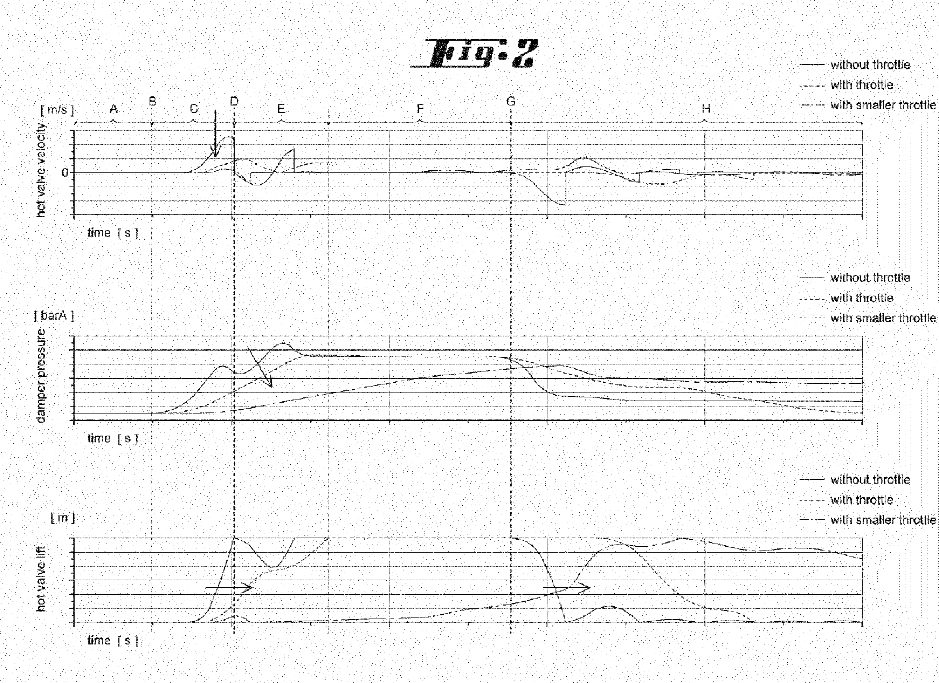

In the following the function of the inventive valve assembly 1 is further described also with reference to figure 2 beginning from an operating state, when the valve needle 13 is in its closing position. In such operating state the fluid pressure within the fluid inlet portion 9 may for example be like or similar to atmosphere pressure. In figure 2 such initial operating state is shown by the time interval A. Thereafter, at the point of time B the pressure of a fluid in the fluid inlet portion 9 is quickly increased, in particular by dispensing the fluid through an active valve assembly. The small throttling via hole 31 effects a comparatively low flow rate into the chamber 35 and that the increase of the pressure within the fluid chamber 35 occurs slower compared to an increase of the pressure within the cavity 12. For this purpose it is preferred that the total cross-sectional area of the hollow cross sections of the fluid passages 29 is greater compared to the cross-sectional area of the hollow cross section of the throttling via hole 31. Although the pressure within the cavity 12 pushes against the large facing front surface of the closing element 19 and tries to open the valve assembly 1 quickly, the described damper 36 ensures a comparatively slow axial movement of the valve needle 13 towards the stop 20, i.e. towards its completely opened position. The movement of the valve needle 13 from its closing position starts when an axial force resulting from the pressure increase becomes greater than an oppositely directed axial force of the spring 22. During the time interval C the valve needle 13 is moved away from its closing position, i.e. the valve assembly 1 is opened up to the maximum opening which occurs when the closing element 19 impinges on the stop 20. This impingement is indicated at the point of time D in figure 2. Due to the impingement the axial velocity of the valve needle 13 is reduced suddenly and even reduced below "0" (which means a movement to the opposite direction) because of the backlash.

In figure 2 the upper diagram compares the "hot valve velocity", which means the axial velocity of the valve needle of the passive valve assembly, on comparing three different passive valve assemblies. The graph shown by a continuous line represents a conventional passive valve assembly without a throttle, i.e. without the described damper 36 including the throttling via hole 31. Both other graphs refer to a passive valve assembly 1 in accordance to the invention and are distinguished by the magnitude of the diameter of its throttling via hole 31. From the graphs it is clear that due to the dampening of an inventive valve assembly 1 the occurring axial velocity of the valve needle 13 is much less compared to a conventional valve assembly. Following the same time scale, the medium diagram of figure 2 compares the damper 36 pressure, i.e. the pressure within the cavity 12. The below diagram shows the "hot valve lift", i.e. the lift of the valve needle 13 of the passive valve assembly. Within the time interval E the valve needle 13 performs a kind of reciprocating motion until the closing element 19 rests in contact to the stop 20, which means that the valve needle 13 remains in a position where the valve assembly 1 is completely opened. Such operating state is shown by figure 1 and is represented by time interval F in figure 2.

At the point of time G the fluid pressure in the fluid inlet portion 9 is suddenly decreased. This typically may be caused, when a coupled active valve assembly is closed and the remaining fluid (in particular compressed natural gas) has been dispensed out of the passive valve assembly 1. Thereafter, the axial force of the spring 22 becomes greater compared to the vanishing pressure force and hence effects a movement of the valve needle 13 towards its closing position. Regarding a passive valve assembly 1 in accordance to the invention also such a backwards motion is decelerated by the described damper 36. The reason is that the fluid which is still contained in the fluid chamber 35 is compressed by the movement of the valve needle 13 but can only slowly escape through the throttling via hole 31. In figure 2 the time interval H depicts the transition from the opened to the closed operating state, again including an oscillating effect. In figure 1 the combustion chamber of a cylinder of an internal combustion engine is symbolically designated by reference number 37.

In the upper diagram the arrow symbolically indicates that due to a throttle the speed is lowered. In the medium diagram the arrow symbolically indicates a comparatively slower pressure build up because of the throttle. In the lower diagram the arrows symbolically indicate a later opening and closing due to the throttle.

## Claims

1. Valve assembly (1) for an injection valve, in particular for direct injection of compressed natural gas (CNG) into a combustion chamber of a cylinder of an internal combustion engine, wherein the valve assembly (1) comprises a valve housing section (2) having a fluid inlet portion (9) and a fluid outlet portion (10), wherein the valve assembly (1) comprises a cavity (12) within the valve housing section (2) wherein the cavity (12) is in fluid communication with the fluid inlet portion (9) and the fluid outlet portion (10), wherein the valve assembly (1) comprises a valve needle (13) which is axially movable along or parallel to a central longitudinal axis (L) of the valve assembly (1) between a closing position and other positions and wherein at least a section (30) of the valve needle (13) extends along the cavity (12), wherein the valve housing section (1) comprises a cross wall (6) being situated axially between the fluid inlet portion (9) and the cavity (12), wherein the cross wall (6) includes a hollow bore (14) extending along or parallel to the central longitudinal axis (L) from a front wall (15) facing the fluid inlet portion (9) to a mouth (16) facing the cavity (12), wherein the valve needle (13) comprises a first axial end section (17) being inserted in the hollow bore (14) and being movable therein axially relative to the cross wall (6), wherein the front wall (15) includes a throttling via hole (31), wherein a hollow cross section of the throttling via hole (31) is smaller compared to a cross section of the first axial end section and wherein the valve housing section (2) comprises one or more fluid passages (29) extending between the fluid inlet portion (9) and the cavity (12), wherein the mouth (16) of the hollow bore (14) or a surface (33) which surrounds said mouth (16) is sealingly connected to the valve needle (13) by an elastomer coupling or a bellow (34) or the like, **characterized in that** a fluid chamber (35) which is defined by the hollow bore (14), the first axial end section (17) of the valve needle (13), the elastomer coupling or the bellow (34) and the front wall (15) is separated from the fluid inlet portion (9) with the exception of the throttling via hole (31) and is tightened from the cavity (12).

2. Valve assembly (1) according to the preceding claim, **characterized in that** the front wall (15)
- is positioned at an end of the cross wall (6) facing away from the mouth (13),
- is arranged in the hollow bore (14) so as to close the hollow bore (14) at its axial end remote from the mouth (16) and
- is fixed to or in one piece with the cross wall (6).

3. Valve assembly (1) according to any one of the preceding claims, **characterized in that** the first axial end section (17) comprises a front surface (32) facing the front wall (15), wherein the hollow cross section of the throttling via hole (31) is smaller compared to the cross section of the front surface (32).

4. Valve assembly (1) according to any one of the preceding claims, **characterized in that** the hollow cross section of the hollow bore (14) and the cross section of the first axial end section (17) are adapted to each other so that the hollow bore (14) provides a longitudinal guidance for the first axial end section (17).

5. Valve assembly (1) according to any one of the preceding claims, **characterized in that** the hollow cross section of the hollow bore (14) and the cross section of the first axial end section (17) are adapted to each other for providing a loose fit or a transition fit.

6. Valve assembly (1) according to any one of the preceding claims, **characterized in that** the hollow cross section of the throttling via hole (31) has a diameter less than 1 millimeter, in particular in a dimension of 100 - 300 micrometers, the limits being included.

7. Valve assembly (1) according to any one of the preceding claims, **characterized in that** the fluid passage (29) or at least one of the fluid passages (29) comprises a drill hole or a notch and in particular is formed in the cross wall (6) and/or in a part of the valve housing section (2) surrounding the cross wall (6), wherein in particular the total cross-sectional area of the hollow cross section of the fluid passage (29) or of the hollow cross sections of the fluid passages (29) is greater than the cross-sectional area of the hollow cross section of the throttling via hole (31).

8. Valve assembly (1) according to any one of the preceding claims, **characterized in that** the valve assembly (1) is of the outward opening type, and/or
**in that** the valve assembly (1) comprises a spring (22) being compressed between an inner supporting surface of the valve housing section (2) and an outer supporting surface (23) of the valve needle (13) or of a member (24) fixed to the valve needle (13) for applying an axially force to the valve needle (13) towards its closing position, and/or
**in that** the valve assembly (1) comprises a stop (20) which is provided to limit a movement of the valve needle (13) away from its closing position.

9. Valve assembly (1) according to any one of the preceding claims, **characterized in that** in an operating state of the valve assembly (1) where the valve needle (13) is in its closing position there is an axial distance between the front face (32) and the front wall (15) or
**in that** in any operating state of the valve assembly (1) the front surface (32) of the valve needle (13) and the front wall (15) are axially spaced.

10. Valve assembly arrangement for an injection valve, the valve assembly arrangement extending along a central longitudinal axis (L) and comprising a first valve assembly and a second valve assembly (1), wherein the second valve assembly (1) is coupled to the first valve assembly in such a fashion that the first valve assembly is operable to inject fluid, in particular compressed natural gas, into a fluid inlet portion (9) of the second valve assembly (1) for increasing a fluid pressure at the fluid inlet portion (9) of the second valve assembly (1) in order to open the second valve assembly (1) for dispensing a fluid from the valve assembly arrangement, **characterized in that** the second valve assembly (1) is a valve assembly (1) according to any one of the preceding claims.

11. Valve assembly arrangement according to the preceding claim, **characterized in that** the first valve assembly comprises a valve needle and an electromagnet for enabling an active movement of its valve needle in a first direction towards an opening position of the first valve assembly or towards a closing position of the first valve assembly and that the first valve assembly comprises a spring for supporting an active movement of its valve needle in a second direction which is opposite to the first direction.

12. Injection valve comprising a valve assembly arrangement according to any one of claims 10 to 11.

## Patentansprüche

1. Ventilbaugruppe (1) für ein Einspritzventil, insbesondere für Direkteinspritzung von Druck-Erdgas (CNG), in eine Brennkammer eines Zylinders einer Brennkraftmaschine, wobei die Ventilbaugruppe (1) einen Ventilgehäuseabschnitt (2) mit einem Fluideinlassteil (9) und einem Fluidauslassteil (10) aufweist, wobei die Ventilbaugruppe (1) einen Hohlraum (12) in dem Ventilgehäuseabschnitt (2) aufweist, wobei der Hohlraum (12) mit dem Fluideinlassteil (9) und dem Fluidauslassteil (10) in fluidischer Verbindung steht, wobei die Ventilbaugruppe (1) eine Ventilnadel (13) aufweist, die entlang oder parallel zu einer zentralen Längsachse (L) der Ventilbaugruppe (1) zwischen einer Schließstellung und anderen Stellungen axial beweglich ist, und wobei sich mindestens ein Abschnitt (30) der Ventilnadel (13) entlang dem Hohlraum (12) erstreckt,
wobei der Ventilgehäuseabschnitt (1) eine Querwand (6) aufweist, die sich axial zwischen dem Fluideinlassteil (9) und dem Hohlraum (12) befindet, wobei die Querwand (6) eine Hohlbohrung (14) hat, die sich entlang oder parallel zu der zentralen Längsachse (L) von einer vorderen Wand (15), die zu dem Fluideinlassteil (9) weist, zu einer Mündung (16), die zu dem Hohlraum (12) weist, erstreckt, wobei die Ventilnadel (13) einen ersten axialen Endabschnitt (17) aufweist, der in der Hohlbohrung (14) eingeführt ist und bezüglich der Querwand (6) axial darin beweglich ist, wobei die vordere Wand (15) ein Drosslungsdurchgangsloch (31) hat, wobei ein Hohlquerschnitt des Drosslungsdurchgangslochs (31) im Vergleich zu einem Querschnitt des ersten axialen Endabschnitts kleiner ist und wobei der Ventilgehäuseabschnitt (2) einen oder mehrere Fluiddurchgänge (29) aufweist, die sich zwischen dem Fluideinlassteil (9) und dem Hohlraum (12) erstrecken,
wobei die Mündung (16) der Hohlbohrung (14) oder eine Fläche (33), die die Mündung (16) umgibt, durch eine Elastomerkupplung oder einen Balg (34) oder dergleichen abdichtend mit der Ventilnadel (13) verbunden ist,
**dadurch gekennzeichnet, dass**
eine Fluidkammer (35), die durch die Hohlbohrung (14), den ersten axialen Endabschnitt (17) der Ventilnadel (13), die Elastomerkupplung oder den Balg (34) und die vordere Wand (15) definiert ist, mit Ausnahme des Drosslungsdurchgangslochs (31), von dem Fluideinlassteil (9) getrennt ist und gegen den Hohlraum (12) abgedichtet ist.

2. Ventilbaugruppe (1) nach dem vorhergehenden Anspruch, **dadurch gekennzeichnet, dass** die vordere Wand (15)
- an einem Ende der Querwand (6), von der Mündung (13) weg weisend positioniert ist,
- in der Hohlbohrung (14) dahingehend angeordnet ist, die Hohlbohrung (14) an ihrem axialen Ende, von der Mündung (16) entfernt, zu schließen, und
- an der Querwand (6) fixiert oder einstückig damit ausgebildet ist.

3. Ventilbaugruppe (1) nach einem der vorhergehenden Ansprüche, **dadurch gekennzeichnet, dass** der erste axiale Endabschnitt (17) eine vordere Fläche (32) aufweist, die zu der vorderen Wand (15) weist, wobei der Hohlquerschnitt des Drosslungsdurchgangslochs (31) im Vergleich zu dem Querschnitt der vorderen Fläche (32) kleiner ist.

4. Ventilbaugruppe (1) nach einem der vorhergehenden Ansprüche, **dadurch gekennzeichnet, dass** der Hohlquerschnitt der Hohlbohrung (14) und der Querschnitt des ersten axialen Endabschnitts (17) aneinander angepasst sind, so dass die Hohlbohrung (14) eine Längsführung für den ersten axialen Endabschnitt (17) bereitstellt.

5. Ventilbaugruppe (1) nach einem der vorhergehenden Ansprüche, **dadurch gekennzeichnet, dass** der Hohlquerschnitt der Hohlbohrung (14) und der Querschnitt des ersten axialen Endabschnitts (17) aneinander angepasst sind, um eine lose Passung oder eine Übergangspassung bereitzustellen.

6. Ventilbaugruppe (1) nach einem der vorhergehenden Ansprüche, **dadurch gekennzeichnet, dass** der Hohlquerschnitt des Drosslungsdurchgangslochs (31) einen Durchmesser von weniger als 1 Millimeter, insbesondere in einer Dimension von 100 - 300 Mikrometer, aufweist, wobei die Grenzen eingeschlossen sind.

7. Ventilbaugruppe (1) nach einem der vorhergehenden Ansprüche, **dadurch gekennzeichnet, dass** der Fluiddurchgang (29) oder mindestens einer der Fluiddurchgänge (29) ein Bohrloch oder eine Kerbe aufweist und insbesondere in der Querwand (6) und/oder in einem Teil des Ventilgehäuseabschnitts (2), der die Querwand (6) umgibt, ausgebildet ist, wobei insbesondere die Gesamtquerschnittsfläche des Hohlquerschnitts des Fluiddurchgangs (29) oder der Hohlquerschnitte der Fluiddurchgänge (29) größer als die Querschnittsfläche des Hohlquerschnitts des Drosslungsdurchgangslochs (31) ist.

8. Ventilbaugruppe (1) nach einem der vorhergehenden Ansprüche, **dadurch gekennzeichnet, dass** die Ventilbaugruppe (1) von der nach außen öffnenden Art ist und/oder
dass die Ventilbaugruppe (1) eine Feder (22) aufweist, die zwischen einer inneren Stützfläche des Ventilgehäuseabschnitts (2) und einer äußeren Stützfläche (23) der Ventilnadel (13) oder eines Glieds (24), das an der Ventilnadel (13) fixiert ist, komprimiert wird, um eine Axialkraft an die Ventilnadel (13) in Richtung ihrer Schließstellung anzulegen, und/oder
dass die Ventilbaugruppe (1) einen Anschlag (20) aufweist, der dazu vorgesehen ist, eine Bewegung der Ventilnadel (13) aus ihrer Schließstellung weg zu begrenzen.

9. Ventilbaugruppe (1) nach einem der vorhergehenden Ansprüche, **dadurch gekennzeichnet, dass** in einem Betriebszustand der Ventilbaugruppe (1), in dem sich die Ventilnadel (13) in ihrer Schließstellung befindet, ein axialer Abstand zwischen der Vorderseite (32) und der vorderen Wand (15) besteht, oder
dass in irgendeinem Betriebszustand der Ventilbaugruppe (1) die vordere Fläche (32) der Ventilnadel (13) und die vordere Wand (15) axial beabstandet sind.

10. Ventilbaugruppenanordnung für ein Einspritzventil, wobei sich die Ventilbaugruppenanordnung entlang einer zentralen Längsachse (L) erstreckt und eine erste Ventilbaugruppe und eine zweite Ventilbaugruppe (1) aufweist, wobei die zweite Ventilbaugruppe (1) mit der ersten Ventilbaugruppe so gekoppelt ist, dass die erste Ventilbaugruppe zum Einspritzen eines Fluids, insbesondere von Druck-Erdgas, in einen Fluideinlassteil (9) der zweiten Ventilbaugruppe (1) zum Erhöhen eines Fluiddrucks am Fluideinlassteil (9) der zweiten Ventilbaugruppe (1) zum Öffnen der zweiten Ventilbaugruppe (1) zur Abgabe eines Fluids von der Ventilbaugruppenanordnung betreibbar ist, **dadurch gekennzeichnet, dass** die zweite Ventilbaugruppe (1) eine Ventilbaugruppe (1) nach einem der vorhergehenden Ansprüche ist.

11. Ventilbaugruppenanordnung nach dem vorhergehenden Anspruch, **dadurch gekennzeichnet, dass** die erste Ventilbaugruppe eine Ventilnadel und einen Elektromagneten zum Ermöglichen einer aktiven Bewegung ihrer Ventilnadel in einer ersten Richtung zu einer Öffnungsstellung der ersten Ventilbaugruppe oder zu einer Schließstellung der ersten Ventilbaugruppe aufweist und dass die erste Ventilbaugruppe eine Feder zum Stützen einer aktiven Bewegung ihrer Ventilnadel in einer zweiten Richtung, die der ersten Richtung entgegengesetzt ist, aufweist.

12. Einspritzventil, das eine Ventilbaugruppenanordnung nach einem der Ansprüche 10 bis 11 aufweist.

## Revendications

1. Ensemble de soupape (1) pour une soupape d'injection, en particulier pour une injection directe de gaz naturel comprimé (GNC) dans une chambre de combustion d'un cylindre d'un moteur à combustion interne, l'ensemble de soupape (1) comprenant une section de boîtier de soupape (2) ayant une portion d'entrée de fluide (9) et une portion de sortie de fluide (10), l'ensemble de soupape (1) comprenant une cavité (12) à l'intérieur de la section de boîtier de soupape (2), la cavité (12) étant en communication fluidique avec la portion d'entrée de fluide (9) et la portion de sortie de fluide (10), l'ensemble de soupape (1) comprenant une aiguille de soupape (13) qui peut être déplacée axialement le long d'un axe longitudinal central (L) de l'ensemble de soupape (1), ou parallèlement à celui-ci, entre une position de fermeture et d'autres positions, et au moins une section (30) de l'aiguille de soupape (13) s'étendant le long de la cavité (12),
la section de boîtier de soupape (1) comprenant une paroi transversale (6) située axialement entre la portion d'entrée de fluide (9) et la cavité (12), la paroi transversale (6) comportant un alésage creux (14) s'étendant le long de l'axe longitudinal central (L) ou parallèlement à celui-ci, depuis une paroi avant (15) faisant face à la portion d'entrée de fluide (9) jusqu'à une embouchure (16) faisant face à la cavité (12), l'aiguille de soupape (13) comprenant une première section d'extrémité axiale (17) insérée dans l'alésage creux (14) et pouvant être déplacée dans celui-ci axialement par rapport à la paroi transversale (6), la paroi avant (15) comportant un trou traversant d'étranglement (31), une section transversale creuse du trou traversant d'étranglement (31) étant plus petite qu'une section transversale de la première section d'extrémité axiale et la section de boîtier de soupape (2) comprenant un ou plusieurs passages de fluide (29) s'étendant entre la portion d'entrée de fluide (9) et la cavité (12),
l'embouchure (16) de l'alésage creux (14) ou une surface (33) qui entoure ladite embouchure (16) étant connectée de manière hermétique à l'aiguille de soupape (13) par un raccord ou un soufflet élastomère (34) ou similaire,
**caractérisé en ce**
**qu'**une première chambre de fluide (35) qui est définie par l'alésage (14), la première section d'extrémité axiale (17) de l'aiguille de soupape (13), le raccord ou le soufflet élastomère (34) et la paroi avant (15), est séparée de la portion d'entrée de fluide (9) à l'exception du trou traversant d'étranglement (31), et est étanchéifiée par rapport à la cavité (12).

2. Ensemble de soupape (1) selon la revendication précédente, **caractérisé en ce que** la paroi avant (15)
- est positionnée à une extrémité de la paroi transversale (6) détournée de l'embouchure (13),
- est disposée dans l'alésage creux (14) de manière à fermer l'alésage creux (14) au niveau de son extrémité axiale éloignée de l'embouchure (16) et
- est fixée à la paroi transversale (6) ou est réalisée d'une seule pièce avec celle-ci.

3. Ensemble de soupape (1) selon l'une quelconque des revendications précédentes, **caractérisé en ce que** la première section d'extrémité axiale (17) comprend une surface avant (32) faisant face à la paroi avant (15), la section transversale creuse du trou traversant d'étranglement (31) étant plus petite que la section transversale de la surface avant (32).

4. Ensemble de soupape (1) selon l'une quelconque des revendications précédentes, **caractérisé en ce que** la section transversale creuse de l'alésage creux (14) et la section transversale de la première section d'extrémité axiale (17) sont adaptées l'une à l'autre de telle sorte que l'alésage creux (14) assure un guidage longitudinal pour la première section d'extrémité axiale (17).

5. Ensemble de soupape (1) selon l'une quelconque des revendications précédentes, **caractérisé en ce que** la section transversale creuse de l'alésage creux (14) et la section transversale de la première section d'extrémité axiale (17) sont adaptées l'une à l'autre de manière à fournir un ajustement lâche ou un ajustement de transition.

6. Ensemble de soupape (1) selon l'une quelconque des revendications précédentes, **caractérisé en ce que** la section transversale creuse du trou traversant d'étranglement (31) présente un diamètre inférieur à 1 mm, en particulier dans une dimension de 100 - 300 µm, les limites étant incluses.

7. Ensemble de soupape (1) selon l'une quelconque des revendications précédentes, **caractérisé en ce que** le passage de fluide (29) ou au moins l'un des passages de fluide (29) comprend un trou percé ou une encoche et en particulier est formé dans la paroi transversale (6) et/ou dans une partie de la section de boîtier de soupape (2) entourant la paroi transversale (6), la surface en section transversale totale de la section transversale creuse du passage de fluide (29) ou des sections transversales creuses des passages de fluide (29) étant en particulier supérieure à la surface en section transversale de la section transversale creuse du trou traversant d'étranglement (31).

8. Ensemble de soupape (1) selon l'une quelconque des revendications précédentes, **caractérisé en ce que** l'ensemble de soupape (1) est du type à ouverture vers l'extérieur, et/ou **en ce que** l'ensemble de soupape (1) comprend un ressort (22) comprimé entre une surface de support intérieure de la section de boîtier de soupape (2) et une surface de support extérieure (23) de l'aiguille de soupape (13) ou d'un organe (24) fixé à l'aiguille de soupape (13), pour appliquer une force axiale à l'aiguille de soupape (13) en direction de sa position de fermeture, et/ou
**en ce que** l'ensemble de soupape (1) comprend une butée (20) qui est prévue pour limiter un mouvement de l'aiguille de soupape (13) à l'écart de sa position de fermeture.

9. Ensemble de soupape (1) selon l'une quelconque des revendications précédentes, **caractérisé en ce que** dans un état de fonctionnement de l'ensemble de soupape (1) dans lequel l'aiguille de soupape (13) est dans sa position de fermeture, il existe une distance axiale entre la face avant (32) et la paroi avant (15) ou
**en ce que** dans un état de fonctionnement quelconque de l'ensemble de soupape (1), la surface avant (32) de l'aiguille de soupape (13) et la paroi avant (15) sont espacées axialement.

10. Agencement d'ensembles de soupape pour une soupape d'injection, l'agencement d'ensembles de soupape s'étendant le long d'un axe longitudinal central (L) et comprenant un premier ensemble de soupape et un deuxième ensemble de soupape (1), le deuxième ensemble de soupape (1) étant accouplé au premier ensemble de soupape de telle sorte que le premier ensemble de soupape soit apte à injecter du fluide, en particulier du gaz naturel comprimé, dans une portion d'entrée de fluide (9) du deuxième ensemble de soupape (1) pour augmenter une pression de fluide au niveau de la portion d'entrée de fluide (9) du deuxième ensemble de soupape (1) afin d'ouvrir le deuxième ensemble de soupape (1) pour distribuer un fluide depuis l'agencement d'ensembles de soupape, **caractérisé en ce que** le deuxième ensemble de soupape (1) est un ensemble de soupape (1) selon l'une quelconque des revendications précédentes.

11. Agencement d'ensembles de soupape selon la revendication précédente, **caractérisé en ce que** le premier ensemble de soupape comprend une aiguille de soupape et un électroaimant pour permettre un mouvement actif de son aiguille de soupape dans une première direction vers une position d'ouverture du premier ensemble de soupape ou vers une position de fermeture du premier ensemble de soupape et **en ce que** le premier ensemble de soupape comprend un ressort pour supporter un mouvement actif de son aiguille de soupape dans une deuxième direction qui est opposée à la première direction.

12. Soupape d'injection comprenant un agencement d'ensembles de soupape selon l'une quelconque des revendications 10 et 11.
